(19)

**Europäisches Patentamt**
**European Patent Office**
**Office européen des brevets**

(11) **EP 4 542 877 A1**

(12) **EUROPEAN PATENT APPLICATION**

(43) Date of publication:
23.04.2025 Bulletin 2025/17

(21) Application number: 23204833.0

(22) Date of filing: 20.10.2023

(51) International Patent Classification (IPC):
**H04B 7/185** (2006.01)    **H04B 7/212** (2006.01)

(52) Cooperative Patent Classification (CPC):
**H04B 7/18517; H04B 7/2125;** H04W 56/0035

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ST Engineering iDirect (Europe) Cy NV**
9100 Sint-Niklaas (BE)

(72) Inventors:
• **DELBEKE, Philippe**
2610 Wilrijk (BE)
• **VERSTRAETEN, Guy**
2140 Borgerhout (BE)

(74) Representative: **Winger**
Mouterij 16 bus 101
3190 Boortmeerbeek (BE)

(54) **DEVICE AND SYSTEM FOR RETURN LINK TIME AND FREQUENCY TRACKING**

(57)    The present invention relates to a terminal (100) for communication with a hub over a non-terrestrial network communication channel and arranged to perform time and/or frequency corrections in return link communication towards said hub, said terminal comprising
- a modulator (101) arranged to generate a return link signal to be transmitted,
- one or more filters (102,114) arranged to receive an error signal indicative of a timing and/or frequency error in said return link communication and to output a filtered signal,
- compensation means (103) to receive said filtered signal, to compensate for said timing and/or frequency error and to output an indication of timing and/or frequency correction to said modulator to be applied when generating said return link signal to be transmitted to said hub,
whereby at least one of said one or more filters has a filter order higher than 1.

Fig.6

**EP 4 542 877 A1**

**Description**

**Field of the invention**

The present invention is generally related to the field of satellite communication systems. More in particular, the invention relates to techniques for satellite terminal time and frequency misalignment correction.

**Background of the invention**

A typical realization of a satellite communication network is based on a star network in which a transmitter at the gateway transmits in the so-called forward (FWD) link via the satellite to multiple terminals. In case of interactive communication, the terminals transmit back in the so-called return (RTN) link via the satellite towards a receiver at the gateway. In 3GPP, the forward link is also denoted the "downlink" and the return link also denoted the "uplink".
Satellite networks require accurate time and frequency alignment for proper communication. With multicarrier Orthogonal Frequency Division Multiplex (OFDM) modulations as used in modern 5G New Radio (SGNR) waveforms the required accuracy is even more critical. In recent years, a growing interest is observed in using the terrestrial SGNR waveform over satellite links. The SGNR radio waveform is based on multi-carrier OFDM modulation while legacy satellite waveforms like DVB-S2X and DVB-RCS are based on Square Root Raised Cosine (SRRC) pulse shaped single carrier transmissions. Next to some clear advantages of OFDM for multi-channel transmissions, there are some drawbacks. A critical disadvantage is the higher sensitivity to time and frequency misalignment of the terminal. The time and frequency misalignments can be caused by terminal reference clock inaccuracies or by Doppler effects due to moving terminals or satellites. Terminal misalignment in time or frequency results in non-orthogonality of the different subcarriers in the OFDM waveform and causes Inter Symbol Interference (ISI) and Inter Carrier Interference (ICI).
The SGNR standardisation body (3GPP) has put forward the use of Global Navigation Satellite Systems (GNSS) and satellite orbit information to pre-compensate the time and frequency errors introduced by mobility effects. This is a critical dependency as the GNSS signal can be missing, jammed or spoofed. Therefore, there is a need for a solution wherein the GNSS information dependency of the communication system is avoided.
The critical synchronization accuracy needs and the Doppler requirements for SGNR Non-Terrestrial Networks (NTN) are now reviewed.
Compared to Terrestrial Networks (TN), the tight synchronization requirement of SGNR OFDM waveforms becomes increasingly difficult to achieve in Non-Terrestrial Network (NTN) scenarios because of two main reasons. First, because the radio frequencies are typically roughly 10 times higher (Ku and Ka band instead of L or S-band), making it more difficult to guarantee absolute carrier frequency accuracy and stability. A second reason is that the longer link delays do not allow fast corrections of timing alignment errors with the same mechanism as in terrestrial networks.
The 3GPP release 17 baseline for NTN links assumes the time and frequency offsets can be compensated based on the availability of terminal GNSS data and satellite orbit information. The GNSS dependency is new compared to legacy satellite networks. GNSS dependency has some important drawbacks : availability is not always guaranteed (e.g. in hostile environments), the power consumption is not negligible and the logon time increases. So, in some use cases, there is a need for GNSS independent operation.
The CP-OFDM waveform used in SGNR is resilient to time mismatches as long as uncertainties are limited and do not exceed the Cyclic Prefix (CP). Misalignment above the CP causes ISI. In SGNR, the CP length depends on the numerology and ranges from 4.7 $\mu$s for numerology 0 to 0.29 $\mu$s for numerology 4 (see Table 1 below). So lower numerologies are more resilient to time misalignment.

Table 1: 5GNR Cyclic Prefix length in function of numerology

| Numerology $\mu$ | SCS [kHz] | CP [us] |
|---|---|---|
| 0 | 15 | 4.69 |
| 1 | 30 | 2.34 |
| 2 | 60 | 1.17 |
| 3 | 120 | 0.59 |
| 4 | 240 | 0.29 |

The frequency misalignment is also critical, all sub-carrier misalignment causes Inter Carrier interference (ICI). The ICI level is function of the subcarrier spacing (SCS). Table 2 shows simulation results where the ICI level is measured in function of the frequency offset. A frequency misalignment of 1% of the subcarrier spacing, denoted relative SCS offset, causes an acceptable ICI level of -35 dB and should allow operation up to SNR levels of 20 dB without noticeable impact from the frequency misalignment (as 35 dB is much higher than 20 dB, so the noise is roughly 15 dB more powerful than the ICI). Note how in contrast to time offsets for frequency resilience the higher numerologies are more robust.

Table 2 : ICI level in function of frequency misalignment

| Relative SCS offset [%] | ICI level [dB] |
|---|---|
| 0.5 | -41.5 |
| 1 | -35.5 |
| 2 | -29.5 |
| 5 | -21.5 |
| 10 | -15.5 |

Assuming a frequency accuracy need of 1% of SCS, a time accuracy of 0.5 CP (hence, half of the cyclic prefix duration) and taking the worst numerology, the required frequency and time accuracies for limited ICI and ISI are respectively roughly 150 Hz and 0.15 µsec. This is a very stringent requirement when compared to legacy single carrier satellite return channel multiple access waveforms like DVB-RCS or the iDirect proprietary MRC (see the paper 'Multi Resolution Coding (MRC) Satellite Waveform', P. Delbeke et al., Ka Conference, 2021). For those legacy satellite waveforms, typical uncertainties of 3 kHz and 10 µs can be accepted, thus orders of magnitudes higher.

First Doppler profiles are determined to model frequency and time misalignments due to the Doppler effect. Typical terminal and satellite mobility use cases for GEO (Geostationary orbit) and LEO (Low Earth Orbit) satellites can be defined. The use cases cover the LEO and GEO scenarios defined in the 3GPP NTN report '3rd Generation Partnership Project; Technical Specification Group Radio Access Network; Solutions for NR to Support Non-Terrestrial Networks (NTN)'.

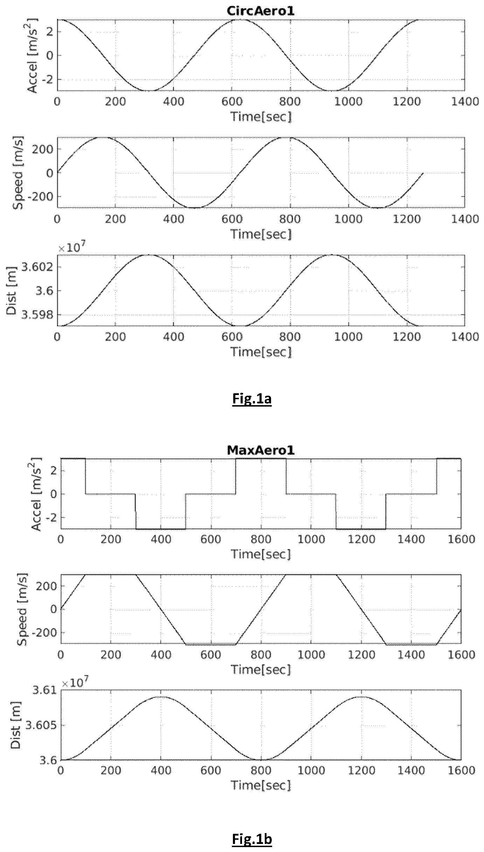

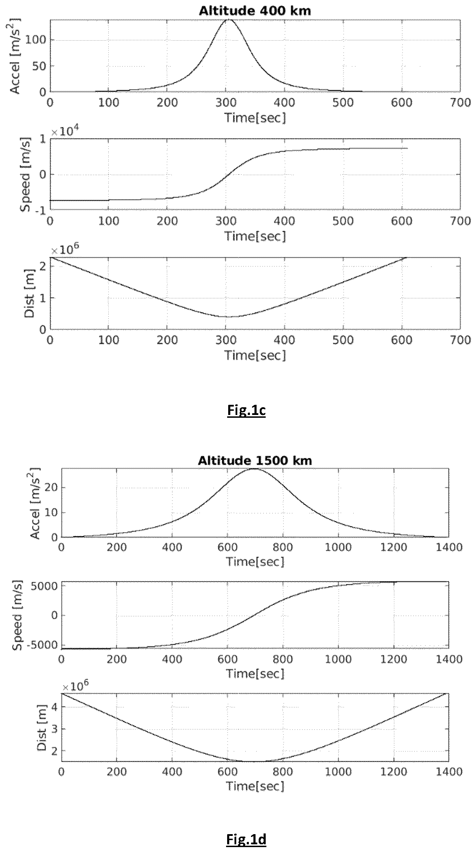

Several user equipment (UE) mobility profiles are defined and combined with LEO or GEO satellite link delays. For satellite movement low and high LEO passes are emulated. Some terminal mobility profiles are shown in Fig.1. Each subfigure shows the link distance in function of time (bottom), the terminal speed (middle) in direction of satellite and the acceleration (top) in direction of satellite in function of time. Two terminal mobility models are considered : circular UE movement profiles (CircAero1 shown in Fig.1a) and 4 constant acceleration UE movement profiles (MaxAero1 shown in Fig.1b). UE stands for User Equipment, also denoted the terminal. The maximum speeds and accelerations for the different simulated profiles are summarised in Table 3. Note how CircAero4 and MaxAero4 are very severe profiles that go beyond the scope of commercial connectivity.

The LEO profiles are modelled based on circular orbits around earth with a zenithal pass. Two reference cases are simulated a low orbit at 400km altitude, denoted LeoLow, and a high orbit LEO profile at 1500km altitude, denoted LeoHigh (Fig.1c and Fig.1d).

Table 3 : Simulated Doppler and clock drift profiles, showing the maximum acceleration and maximum speed as well as the different considered clock drifts

| Label | a [$m/sec^2$] | v [$m/sec$] | Remark |
|---|---|---|---|
| CircAero1 | 3 | 300 | Circular movement 0.7 to 1.3 G commercial flight |
| CircAero2 | 10 | 100 | Circular movement 0 to 2 G with maritime speed |
| CircAero3 | 10 | 300 | Circular movement 0 to 2 G with aero speed |
| CircAero4 | 100 | 2400 | Circular movement Extreme 10G and Mach7 |
| MaxAero1 | 3 | 300 | Abrupt a changes 0.7 to 1.3 G commercial flight |
| MaxAero2 | 10 | 100 | Abrupt a changes 0 to 2 G with maritime speed |
| MaxAero3 | 10 | 300 | Abrupt a changes 0 to 2 G with Aero speed |
| MaxAero4 | 100 | 2400 | Abrupt a changes Extreme 10G and Mach7 |
| LeoLow | 130 | 8000 | Low altitude (400km) zenital LEO pass |
| LeoHigh | 27 | 5500 | High altitude(1500km) zenital LEO Pass |
| ClockDrift1 | | | 0.01ppm/sec clock drift |
| ClockDrift2 | | | 0.001ppm/sec clock drift |
| ClockDrift3 | | | Random walk 0.001ppm/sec, Allan Var 1e-9 at 1sec) |
| ClockDrift4 | | | Random walk 0.0001ppm/sec, Allan Var 1e-10 at 1sec) |
| Stable | | | No drift, nor offsets |

Next to Doppler offsets originating from terminal or satellite movements, the UE clock reference can be subject to drift. The clock drift also introduces time and frequency errors. To assess the clock tracking performance, clock drift profiles are also included in Table 3. The clock drift profile includes fixed drift profiles (ClockDrift 1 and 2 expressed in ppm/sec drift) and random walk phase excursion profiles (ClockDrift 3 and 4 expressed by their Allan variance at 1 sec). Finally, a stable system with no drift and only noise on the channel is added to evaluate the loop performance with only AWGN noise and no time or frequency drifts impairments.

The link delay is proportional to the link distance d. The instantaneous link delay can be computed as follows:

$$\text{Delay} = d/c*2$$

where d is the link distance and c is the speed of light.

The frequency offsets are proportional to the speed and the RF frequency. Excluding relativistic effects, the offsets can be computed as:

$$\text{F\_Offset} = v/c*\text{F\_RF}*2$$

where c is the speed of light and F_RF is the RF carrier centre frequency.

The factor two in the above equations for Delay and F_Offset_accounts for the doubling of the perceived speed and distance changes due to forward and return paths effects. The effect is doubled because both the forward link and the return link are impacted by link changes. To have the correct link delay, the UE to hub distance must be accounted twice. This is correct for the delay changes, but only an approximation for the frequency offset as the RF frequencies for forward and return link can be different. For transparent (bent pipe) satellites two hops delay (UE to Hub and Hub to UE) is assumed between the transmission and the estimator feedback in the loops. The solution also applies for regenerative satellites in which case the link delay is limited to UE to satellite and back.

In conclusion the more stringent time and frequency synchronisation requirements of 5GNR waveform combined with higher mobility profiles require novel time and frequency solutions for 5GNR over satellite links. The GNSS data as proposed by 3GPP is a solution, but also comes with a major system dependency that can better be avoided. So, there is a need for improved time and frequency tracking solutions without GNSS dependency.

**Summary of the invention**

It is an object of embodiments of the present invention to provide for a terminal for communication over a non-terrestrial network channel and for a system comprising at least one such a terminal and a hub, wherein timing and/or frequency errors can be tracked without being dependent on GNSS data.

The above objective is accomplished by the solution according to the present invention.

In a first aspect the invention relates to a terminal for communication with a hub over a non-terrestrial network communication channel and arranged to perform time and/or frequency corrections in return link communication towards the hub. The terminal comprises

- a modulator arranged to generate a return link signal to be transmitted,
- one or more filters arranged to receive an error signal indicative of a timing and/or frequency error in the return link communication and to output one or more filtered signals,
- compensation means to receive the filtered signal(s), to compensate for the timing and/or frequency error and to output an indication of timing and/or frequency alignment to the modulator to be applied when generating the return link signal to be transmitted to the hub, whereby at least one of the one or more filters has a filter order higher than 1.

The proposed solution indeed allows for time and/or frequency error correction in the return link direction without any need for GNSS. With 'return link' is meant the link from the terminal via a satellite to the hub. In this invention the error signal indicative of a timing and/or frequency error is filtered in a filter with filter order higher than 1. The higher order filter is part of a closed tracking loop, which can be implemented in various ways, as detailed below. When NTN is considered, some specific challenges need to be addressed, as faster variations of the error occur and consequently, faster corrections are needed.

In a preferred embodiment the terminal is arranged to receive timing and/or frequency alignment information from a forward link connection, i.e., from the hub towards the terminal. The terminal comprises an error determination block arranged to derive the error signal indicative of timing and/or frequency alignment error for the return link from the information of the forward link connection and to apply the error signal to a first filter of the one or more filters, whereby the first filter has a filter order higher than 1. The indication of timing and/or frequency alignment error for the return link is fed in a local loop to the error determination block to derive the error signal. This embodiment is also referred to later in the description as the local loop solution. The first filter can be seen as a local loop filter. From the demodulated forward link signal the forward link time and/or frequency error is estimated and from that information an error signal indicative of timing and/or frequency alignment error for the return link is derived in this embodiment.

In a preferred embodiment the local loop is arranged to compensate for a timing and/or frequency error only originating from link delay changes and not from reference clock offsets as the two effects require a correction in the opposite direction for a given error.

Advantageously, the local loop can have a smaller time constant than the round-trip time of the return link and the forward link, without any risk of oscillations due to the fast loop. It is an advantage that the local loop can react to fast variations in the error, for example variations due to terminal mobility. Another advantage of the local loop solution is that the cost due to control messages overhead is limited.

In another aspect the invention relates to a system comprising one or more terminals as previously described and a hub arranged to demodulate the return link signal.

Preferably the hub is arranged to estimate a return link timing and/or frequency error and the estimated return link timing and/or frequency error is fed back in a hub loop to a second filter of the one or more filters. This embodiment is also called the hub loop solution. This second filter can be seen as a hub loop filter.

In some embodiments the second filter has a filter order higher than 1. This is for example the case if there is only a hub loop and the hub loop filter is the only filter in the tracking loop.

In advantageous embodiments the hub loop solution and the local loop solution are combined. In the combined solution there are thus two loops. The local loop filter may then be a filter of higher order and the hub loop filter a first order filter.

In a preferred embodiment the local loop is arranged to compensate for a timing and/or frequency error originating from link delay changes and the hub loop is arranged to compensate for a timing and/or frequency error originating from clock reference offsets between the hub and the terminal(s).

In one embodiment the hub comprises a 5GNR Physical Broadcast Channel Synchronisation Signal block for estimating the timing and/or frequency alignment information of the downlink.

In some embodiments the second filter (i.e., the hub loop filter) is comprised in the hub.

The hub loop may have a time constant larger than the total round trip time of the return link and the forward link delay. Such a large time constant avoids the occurrence of oscillations in the loop.

In a preferred embodiment the non-terrestrial network is a satellite network.

In another embodiment the system comprises a regenerative satellite.

In a preferred embodiment the modulator is an OFDM modulator.

In a further aspect the invention relates to a method for performing time and/or frequency correction in return link communication from a terminal as described above to a hub over a non-terrestrial network channel. The method comprises :

- receiving in one or more filters of the terminal an error signal indicative of a timing and/or frequency error in the return link communication,
- applying a filtered signal output by the one or more filters to a compensation means to compensate for the timing and/or frequency error and to output an indication of timing and/or frequency correction,
- generating in a modulator of the terminal a return link signal to be transmitted to a hub using the indication of timing and/or frequency correction,

whereby at least one of the one or more filters has a filter order higher than 1.

In a preferred embodiment the timing and/or frequency error is at least partially due to link delay changes between the terminal and the hub.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, wherein like reference numerals refer to like elements in the various figures.

Fig.1 illustrates sample mobility profiles modelling terminal or satellite movements.

Fig.2 illustrates closed loop tracking of time or frequency errors based on forward link correction estimated in the terminal.

Fig.3 illustrates the problem of uplink frequency correction differences for forward link errors originating from clock reference offsets or Doppler offsets.

Fig.4 illustrates the closed loop tracking using hub side error estimates for terminal transmission corrections.

Fig.5 illustrates more details on the higher order loop filtering.

Fig.6 illustrates the combined hub and local loop tracking of Figs.5 and 2.

Fig.7 illustrates time estimator root mean square (rms) error in function of SNR, number of allocated resource blocks and number of DMRS symbols per slot.

Fig.8 illustrates the delay tracking performance for several loop parameters for UE mobility profile MaxAreo1 and CircAero1 (as defined in Table 3) in GEO and LEO loop delay conditions.

Fig.9 illustrates the delay tracking performance for several loop parameters for LEO mobility profile.

Fig.10 illustrates the frequency tracking performance for several loop parameters for UE mobility profile MaxAreo1 and CircAero1 (as defined in Table 3) in GEO and LEO loop delay conditions.

Fig.11 illustrates the delay tracking performance for several loop parameters for LEO mobility profile.

## Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

**EP 4 542 877 A1**

As opposed to the navigation data (GNSS) based time and frequency compensation method proposed by 3GPP or, for example, in US6675013 B1, the solution proposed in this invention is based on closed loop tracking of the terminal carrier frequency offsets and symbol time offsets to correct errors introduced by mobility of terminal or satellite.

Closed loop timing correction is already applied in SGNR TN with the Timing Advance (TA) mechanism. However, when moving to NTN, the higher link propagation delay is limiting the speed of the TA corrections, and the faster movements require faster corrections. For the frequency correction, there is no standardised solution for closed loop correction in the latest SGNR standard (Release 17).

Similarly, closed loop time and frequency tracking solutions are also applied in legacy DVB-S2X/RCS systems using first order closed loops, but as set out above, when using OFDM, the required tracking accuracy is higher, making the first order loop correction used in DVB-RCS inadequate.

NTN links require faster time corrections than what is possible with first order loops and the TA mechanism because of the high link delay and/or faster variations of time (e.g., due to very high speeds and acceleration of LEO satellites). NTN links have higher frequency errors than terrestrial networks (e.g., due to the higher carrier frequencies) and thus require accurate frequency corrections, however not possible in 3GPP due to the lack of frequency error estimation feedback. Those corrections should be also faster than in DVB-S2X/RCS2 to avoid ICI with the small sub-carrier spacing in OFDM. To overcome those limitations of first order correction loops, higher order tracking loops are proposed. A second order control loop can correct errors and error rates. A third order loop can correct errors, error rates and error rate variations for both time and frequency errors.

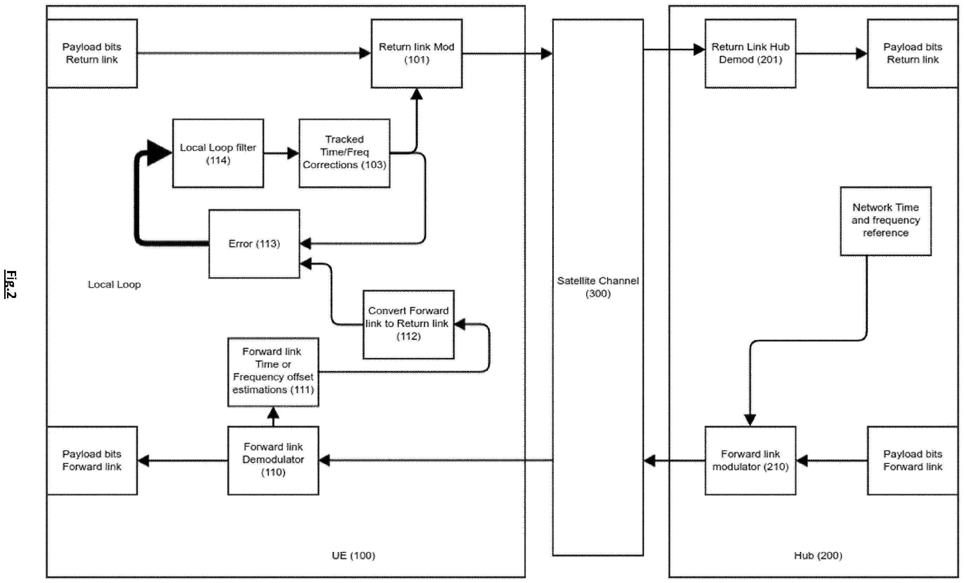

A first solution for GNSS independent time and carrier frequency offset tracking is terminal slaving to the forward link carrier as in the embodiment depicted in Fig.2. This embodiment is further referred to as the local loop solution. Fig.2 shows a block scheme comprising a terminal (100), a hub (200) and a satellite channel (300) connecting the terminal and the hub. The channel (300) includes the (transparent bent pipe) satellite link (including obviously satellite movement effects) as well as terminal movement effects. The return link modulator (also shortened to "Mod") block (101) in the UE is responsible for generating the return link signal to be transmitted to the hub side. Note that block (101) in Fig.2 represents the modulator with all its functionalities. This modulator includes forward error correction (FEC) encoding, symbol mapping, sample generation (e.g., including IFFT in case of OFDM), upsampling and conversion to RF frequency. The invention is not limited to a modulation type, i.e., the modulation can generate single carrier square root raised cosine waveform (like in DVB-RCS2) or multicarrier OFDM waveform (like in SGNR).

The terminal or UE further comprises a demodulator block (110). From the demodulated signal an estimation of the symbol time and/or carrier frequency error in the downlink is performed. This information is converted (112) to estimations taking into account differences between return link and forward link parameters. The conversion is required for frequency correction as the radio frequencies can differ between return link and forward link. An error signal indicative of a timing and/or frequency error in the return link can then be computed (113), which is next applied to the local loop filter (114). The resulting filtered signal is an input to a compensation block (103) where tracked corrections (compensations) for the timing and/or frequency are computed and an indication of timing and/or frequency correction to the return link modulator is output. The same output is also fed back in a local loop by feeding it to block (113) for use in the error computation. The local loop filter (114) exploits higher order corrections.

A solution as in the embodiment of Fig.2 performs both time and frequency corrections. Frequency tracking is the most critical task of the two. In this solution, all terminals slave their clock to the terminal forward link estimation in their demodulator (110) and adapt their return link frequency accordingly. The forward link frequency errors are estimated (111) and converted to return link frequencies (112). The error to the tracked offset is computed (113) and a local loop filter (114) tracks the results.

The solution of terminal slaving to the forward link as presented in Fig.2 is also typical for terminal local reference clock offset corrections in fixed terminals. Here, in the presented first solution also called local loop solution, on the contrary, the method is used to correct Doppler effects on the radio link. In this solution, the local reference clock in the terminal is assumed to be good enough (i.e., accurate enough with negligible offset) or to be corrected by other means. As explained below, the local loop solution cannot be used to correct both effects together.

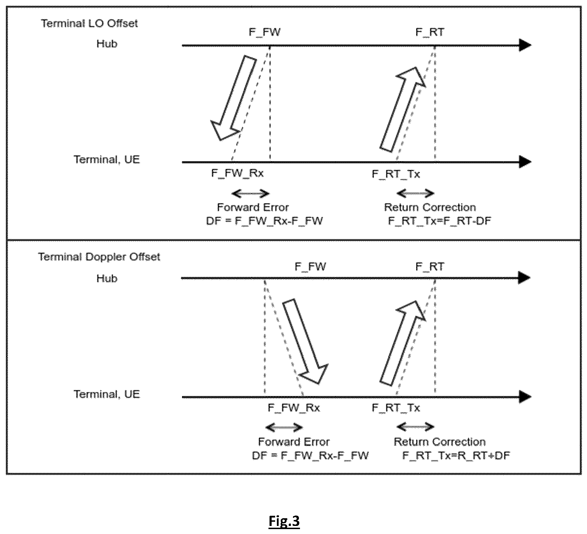

The forward link frequency offset measurement (111) in the UE does not allow differentiating frequency offsets originating from Doppler effects and offsets originating from local reference clock offsets. These two effects require an opposite correction as explained in the paper 'Doppler Shift Estimation in 5G New Radio Non-Terrestrial Networks' (X.Lin et al., IEEE Global Communications Conference 2021) and illustrated in Fig.3. Wrong allocation of the frequency error source results in doubling the error instead of compensating the error. So, the local loop solution can only correct either the clock reference offsets when no mobility (no Doppler) is present, or, as proposed here, the Doppler effects in cases where the terminal reference clock is assumed very good. The good reference clock can be available at the terminal side or corrected via another loop mechanism.

As an example, a required frequency accuracy of 150 Hz, an RF frequency of 30 GHz and a local loop tracking of the Doppler frequency offsets (but not the reference clock offsets) are assumed. The local clock accuracy should then be better than 150 Hz/30 GHz = 5ppb which may be very challenging for low cost terminals.

7

The local loop cannot correct both the reference clock offsets and the Doppler drift offsets but offers some notable advantages. First, it does not require periodic time or frequency error control messages from the hub to the User Equipment (i.e., the terminal). This limits the control messages overhead cost. This also means it can be implemented without the need for new MAC layer messages in 3GPP standard. Second, the loop can be fast, as it is local and thus there are no long latencies between different blocks in the loop, thus there is no impact from the long satellite roundtrip time.

The local loop can track both frequency and delay errors caused by changes on the link delay due to mobility of satellite or terminal. However, in that case, for the frequency offsets the local loop cannot correct local reference clock offsets. For the delay error the local loop can only estimate and track changes due to Doppler effect and not correct the absolute link delay error. The terminal has no absolute time reference to measure the absolute time misalignment. The absolute delay correction must come from hub side estimates, for example, via the timing advance (TA) mechanism described in SGNR.

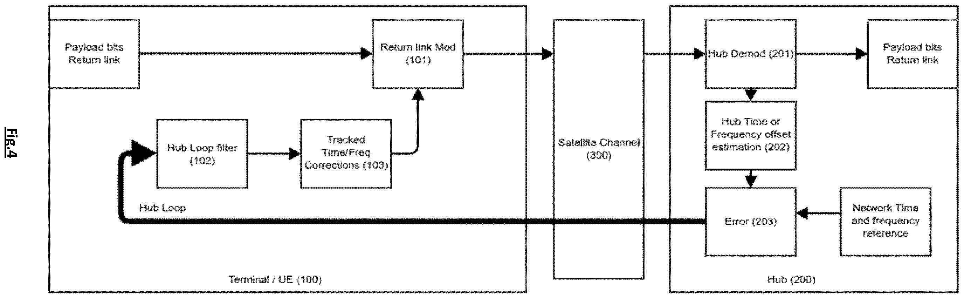

Another embodiment of the invention is shown in Fig.4. The communication system comprises at least one terminal (100) and a hub (200) that communicate over a non-terrestrial network communication channel (300). In advantageous embodiments the non-terrestrial network channel is a satellite channel.

Fig.4 shows the return link composed of a modulator (101) at the terminal (UE) side and a demodulator (201) at the hub side. The channel (300) represents the (transparent bent pipe) satellite link (including satellite movements) as well as terminal movements. Hub side estimates (202) of time and frequency offset on the uplink are used in a hub loop to compensate at the terminal side the transmission time and transmission carrier centre frequency (103). The name "hub loop" indicates that at least part of the loop is performed at the hub side. The hub loop filter (102) forms part of the hub loop and is a higher order filter which can perform proportional or integral corrections. It is not needed that the hub loop filter is located at the hub side. The name only indicates that it is part of the hub loop.

In some embodiments, like the one depicted in Fig.4, the hub loop filter (102) is located at the UE side. This allows a more granular per sample update of the frequency and time corrections while keeping the feedback error message (link between blocks 203 and 102 in Fig.4) rate low. The only parameter fed back from hub to terminal is the estimated error; all integration operations are performed at the UE side.

In other embodiments the hub loop filter (102) can be implemented at the hub side, so further limiting the complexity in the terminal. Keeping the complexity at the hub side is advantageous, but it results in certain use cases (depending on the needed corrections to be made) in larger absolute correction steps depending on the loop update period. In certain use cases with higher variations, this solution also requires feeding back more parameters to the UE like, e.g., the correction, the correction drift and the drift variation.

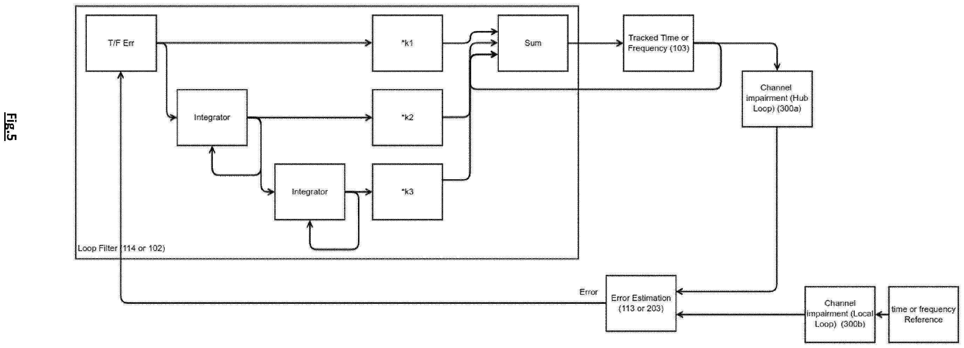

Fig.5 shows a more detailed scheme of the (hub or local) loop filter, excluding modulation and demodulation functionality. A same loop filter structure is used for time and frequency error corrections. The (hub or local) loop filter receives its input from forward link time and/or frequency errors in case of the local loop (Fig.2) or from hub side return link waveform time and/or frequency estimations in case of the hub loop (Fig.4). The loop in Fig.5 also shows an important difference between both loops, namely the position of the channel or the Doppler effects insertion. For the local loop the reference clock used in the forward link is impaired by Doppler effects (300b) whereas for the hub loop, the impairment is in the loop (300a). In both cases the loop will zero the difference between the two received inputs (113 or 203 on Fig.5) resulting in a waveform aligned to the hub time and/or frequency reference in the return link demodulator. When the return link is well aligned to the hub time and frequency reference, demodulation is possible without ISI and ICI.

The loop filter is characterised by three parameters $k_1$, $k_2$ and $k_3$ shown in Fig.5. The parameter $k_1$ is the proportional correction factor, $k_2$ is the integral correction factor and $k_3$ is the integral of integral correction factor making it a third order loop and allowing tracking second order variations. The loop can also be characterised in function of time constant Tc, damping factor ($\zeta$) and k3factor (k3f). Tc defines the loop speed. The damping factor ($\zeta$) expresses the compromise between fast settling time and allowed overshoot and oscillations on step response. $k_3$ is defined by a k3factor which defines how much slower the third order correction is. In order to avoid influence of $k_3$ on the second order loop parameters Tc and damping factor, as a rule of thumb k3factor is set to 10. The relation between the $k_n$ parameters and loop parameters like time constant (Tc) and damping factor ($\zeta$) is given in Table 4.

Table 4: Loop filter types and parameters

| Loop order | Parameters | Expected performance | Derived $k_1$, $k_2$, $k_3$ |
|---|---|---|---|
| First order | $Tc$ | Will zero step response | $k_1 = 1/Tc$ <br> $k_2 = k3 = 0$ |

(continued)

| Loop order | Parameters | Expected performance | Derived $k_1$, $k_2$, $k_3$ |
|---|---|---|---|
| Second order | $Tc$, $\zeta$ | Will zero ramp response | $\omega_n = 1/(\zeta * tc)$<br>$k_1 = \zeta * \omega_n$<br>$k_2 = \omega_n^2$<br>$k_3 = 0$ |
| Third order | $Tc$, $\zeta$, $k3$ factor | Will zero second order variation | $\omega_n = 1/(\zeta * tc)$<br>$k_1 = \zeta * \omega_n$<br>$k_2 = \omega_n^2$<br>$k_3 = 1/tc^3/k3factor$ |

The loop performance for step and ramp responses is also given in Table 4. The carrier frequency offset is proportional to speed, so a constant speed results in a fixed frequency offset, while the delay is proportional to distance, so a constant speed results in a ramp variation of the delay. For a constant speed, a zero-delay steady state error cannot be achieved via a first order loop, it can be achieved via a second order loop or higher.

In SGNR, the implementation of higher loop order requires some changes in the (terminal side) loop algorithms but no changes in waveform. Only limited signalling improvements are required. In particular, new Medium Access Control (MAC) messages are required. MAC Control Element (CE) messages exist for timing correction and a new MAC CE message can be defined for the frequency corrections. The new MAC CE messages allow sending both the time and frequency errors back to the terminal. The MAC CE message for Timing Advance (TA) correction already exists in standard and can be reused.

The hub loop offers with respect to the local loop the advantage of correcting frequency and time errors originating from both Doppler offsets and local reference offsets. This makes it an attractive solution. Compared to the local loop solution, the loop speed is limited by the satellite link delay and requires a relatively high overhead due to the need for frequent control corrections (for example, every 10 ms) fed back from the hub to the UE. The local loop as presented in Fig.2 is faster and does not require any extra control overhead over the link but suffers from the drawback that it does not allow for correction of the local reference offsets or drifts.

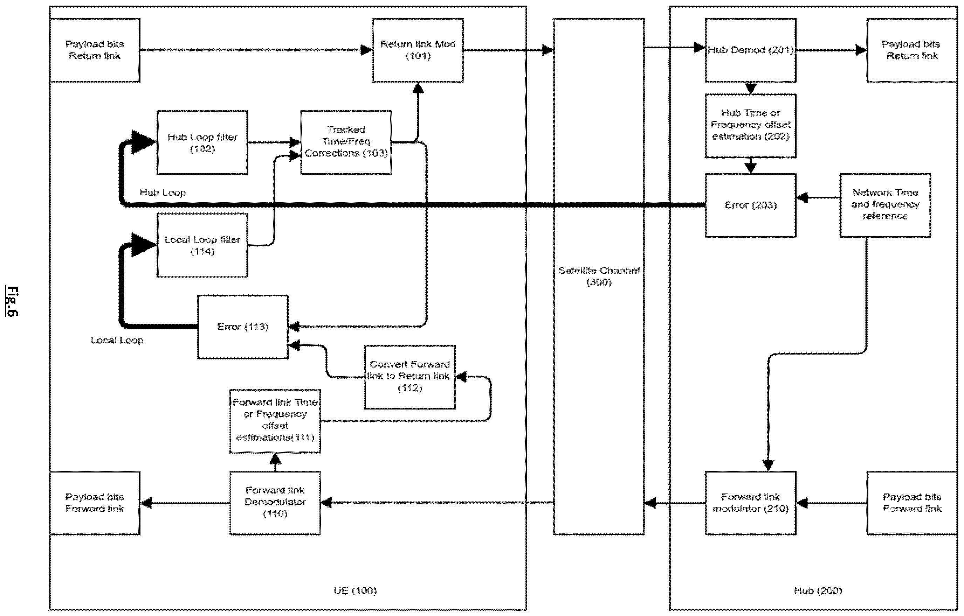

In the embodiment presented in Fig.6 both loops are combined, i.e., a fast, local loop and a slower hub loop, hereby combining the advantages of local and hub loops. The local loop corrects all effects introduced by terminal or satellite mobility. This can be done in a fast local loop without causing any extra control overhead. As explained above, the local loop introduces an offset caused by the reference clock offset or drifts as those cannot be corrected via the local loop. The second, slower hub loop corrects the errors introduced by the clock offset. This second loop can be much slower (as that offset does not change quickly, as there is no need to correct fast changes due to mobility).

In SGNR, the slower hub loop can be implemented via the existing advance mechanism for delay tracking. For carrier frequency corrections, a new control message is required for the slower hub loop.

An extra advantage of the local loop and combined loop solution is that the local time and frequency offsets estimates required for fast Doppler corrections can be based on the forward link waveform that is always present. Tracking can remain active even when there is no active return transmission. In particular, the SGNR Physical Broadcast channel (PBCH) is always present in the forward link waveform and has the necessary Synchronisation signal block (SSB) allowing accurate time and frequency offset estimation.

In the tracking solutions presented above, the system silently assumes that the terminal gets synchronized to the network at startup or during terminal logon. A solution for the logon challenge over satellite links was proposed in 'Robust Logon Waveform Deployed in Large Mobile Satellite Access Networks', (D. Delaruelle, Ka Conference, 2019) and US1145680 B1.

The standardised SGNR Physical Random Access Channel (PRACH) waveforms for terminal logon are designed for Terrestrial networks (TN) and only allow limited time and frequency uncertainties. NTN logon without GNSS information and resulting high time and frequency uncertainties also requires some substantial changes to the SGNR logon channel waveform. The solutions proposed in this invention allow reducing the GNSS dependency, limiting the GNSS need to only the logon phase.

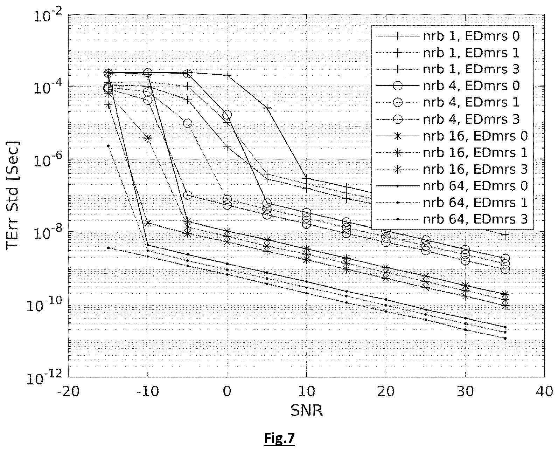

First the error estimator (111, 202) quality is considered as this may have an impact on the overall tracking loop performance. Realistic estimators inaccuracies are considered in loop simulations presented below. The parameters and channels considered for the simulations are chosen for the sake of the illustrating the invention and are obviously not limiting the invention to those parameters. The simulation considers the SGNR physical uplink shared channel (PUSCH). The time error estimation is performed on known symbols, more specifically the demodulation reference symbols (DMRS), in the received waveform in the hub. As the DMRS overhead is more or less constant with the allocation bandwidth (or the number of allocated resource blocks (RB)), there are more DMRS symbols for higher bandwidth allocations and therefore the estimator quality is improving with higher bandwidth allocations. To avoid poor time error estimators in low bandwidth allocations, the DMRS density can be increased for lower bandwidths. Fig.7 shows time error estimator performance in function of SNR, number of RBs (denoted nrb) and DMRS overhead (denoted EDmrs and expressed in number of DMRS symbols per slot) for PUSCH transmissions. The estimator noise must be taken into account in the overall loop performance. The estimator does not have to strictly meet the accuracies specified above (0.15), but a poor estimator requires long averages and limits the loop speed (slow loops) to limit the self-noise in the loop. If the loop is too fast, the estimator noise is dominant in loop tracking errors.

The frequency error estimator is based on two phase measurements consecutive in time and performed on known symbols, here DMRS symbols, spaced by one 5G-NR frame of 10 ms. The quality of the frequency estimate also changes with SNR. The hub loop update period is assumed to be one update per SGNR frame of 10 ms. This requires and overhead message for each UE every 10 ms.

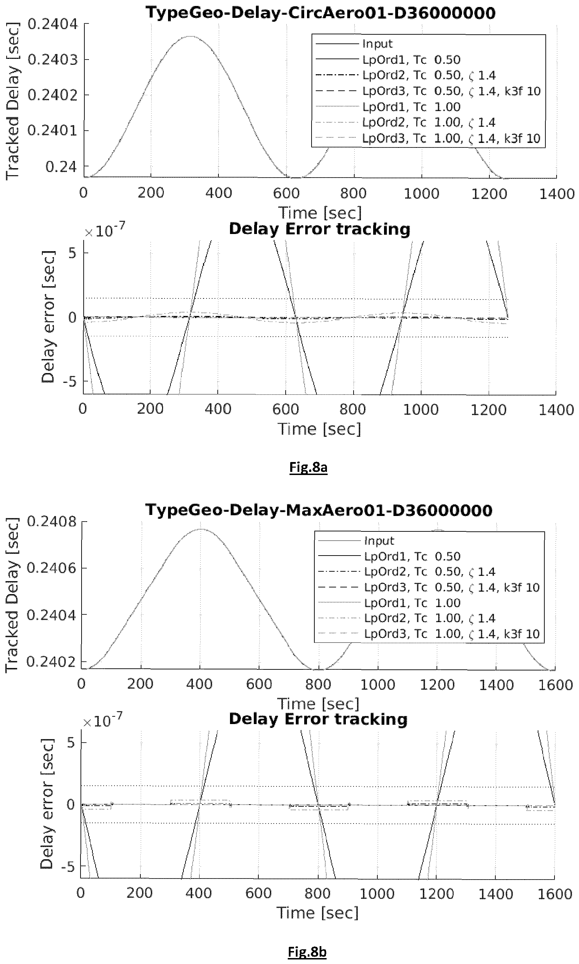

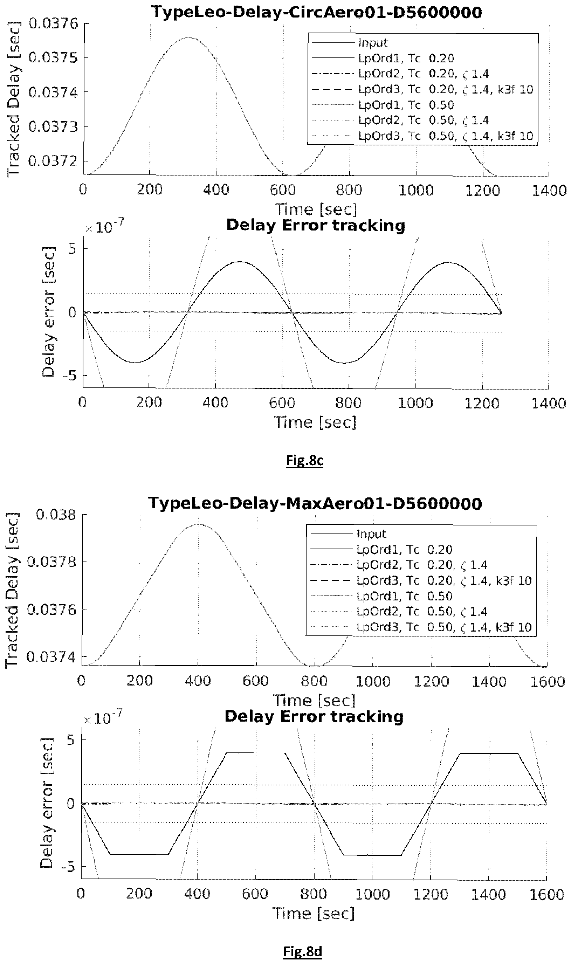

Fig.8 shows hub loop delay tracking results only accounting for terminal mobility (2 aero terminal mobility profiles) but including respective loop delays for GEO (Figs.8a and 8b) and LEO (Figs. 8c and 8d)) satellites. The Doppler effects from the satellite are not yet included for the sake of the analysis. The figures show transient delay changes due to mobility profile for circular and maximum acceleration profiles for different loop orders (denoted LpOrd). In each subfigure, the top figure shows the changing link delay and the tracked link delay (which appear to coincide as the error is much smaller than the absolute delay), the bottom figures show the differences between both corresponding to the tracking error. Showing both results on top of each other is interesting as it can be verified for which absolute delays the relative time error is highest. The dotted horizonal black line is the maximum allowed time misalignment for optimal performance for 15 kHz SCS, thus $\pm$ 0.15 $\mu$s. Figs.8a and 8b show the terminal mobility profiles with GEO satellite delay with loop time constants (denoted TC) of 0.5 second and 1 second. The damping factor is denoted d. Faster loops are not possible in GEO conditions due to link delay. Figs.8c and 8d show similar results for terminal mobility profiles with LEO satellite delay. The time constants are 0.2 and 0.5 seconds. TC can be smaller for LEO because of the smaller loop delay in LEO with respect to GEO, resulting in better tracking performance. Comparing Fig.8a and 8c (or 8b and 8d), one can see that LEO conditions allows faster loops because of the shorter link delay, and consequently, better tracking of the mobility profiles delay changes. It is clear that a first order filter (LpOrder1) never achieves the requirements, even when only considering terminal mobility. A second order loop meets the requirement but has a non-zero steady state error for constant acceleration (Fig 8b). The third order component will zero the steady state error for constant acceleration leaving only a transient at the acceleration change points.

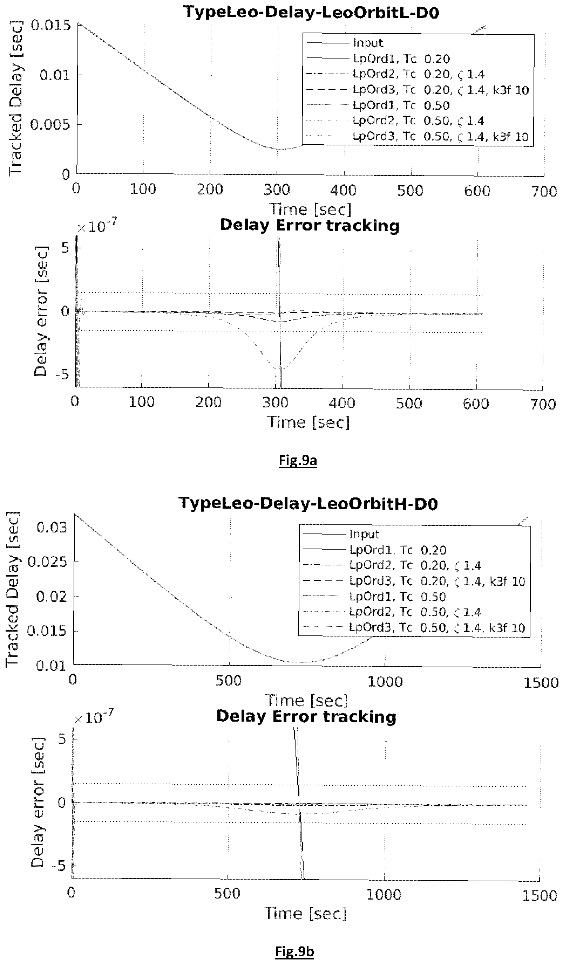

Next the hub loop delay tracking performance is considered, only accounting for satellite delay variations, more specifically for LEO satellite movements, in Fig.9. The low LEO orbit (denoted LEOOrbitL) (Fig.9a) is much more critical than the high orbit (denoted LEOOrbitH) (Fig.9b) because of the higher associated accelerations. The lower loop delay (compared to GEO), combined with the third order tracking loop gives good performances in both LEO cases, although a second order loop with TC = 0.2 also achieves requirements, but may be too risky when accounting for both satellite delay variations as well as terminal mobility. Furthermore, as mentioned below, second order loops have a steady state error in the presence of accelerations.

As shown on Fig.8 and 9, for none of the use cases, a first order loop meets the target requirements. The second and third order loops are better. The third order loop will zero the steady state error for constant acceleration segment, while the second order loop has a steady state error in the presence of accelerations (hence, when the slope of the delay changes), so the third order loop is preferred. This can best be seen in Fig.8b.

UE mobility tracking in GEO conditions is more critical than LEO satellite mobility. For LEO satellites, the relative speeds and accelerations from the satellite are higher, but the loop delay is smaller, so allowing faster tracking and thus allowing to follow those variations better.

Table 5: Delay tracking performance for GEO and LEO delay in all tested mobility profiles. Showing RMS and peak errors for several SNR levels

| Profile | | RMS Error [usec] | | | Peak Error [usec] | | |
|---|---|---|---|---|---|---|---|
| | | -10dB | 0dB | 10dB | -10dB | 0dB | 10dB |
| GEO delay Loop | CircAero01 | 0.003 | 0.002 | 0.001 | 0.009 | 0.006 | 0.003 |
| | CircAero02 | 0.046 | 0.046 | 0.046 | 0.068 | 0.066 | 0.065 |
| | CircAero03 | 0.016 | 0.016 | 0.016 | 0.029 | 0.026 | 0.023 |
| | CircAero04 | 0.195 | 0.196 | 0.196 | 0.279 | 0.279 | 0.277 |

(continued)

| Profile | | RMS Error [usec] | | | Peak Error [usec] | | |
|---|---|---|---|---|---|---|---|
| | | -10dB | 0dB | 10dB | -10dB | 0dB | 10dB |
| | MaxAero01 | 0.006 | 0.005 | 0.005 | 0.042 | 0.039 | 0.039 |
| | MaxAero02 | 0.054 | 0.054 | 0.054 | 0.128 | 0.130 | 0.128 |
| | MaxAero03 | 0.031 | 0.031 | 0.031 | 0.131 | 0.129 | 0.128 |
| | MaxAero04 | 0.351 | 0.351 | 0.350 | 1.276 | 1.276 | 1.275 |
| LEO delay Loop | CircAero01 | 0.004 | 0.003 | 0.001 | 0.019 | 0.010 | 0.004 |
| | CircAero02 | 0.004 | 0.003 | 0.001 | 0.014 | 0.008 | 0.003 |
| | CircAero03 | 0.004 | 0.003 | 0.001 | 0.017 | 0.010 | 0.004 |
| | CircAero04 | 0.004 | 0.003 | 0.002 | 0.015 | 0.010 | 0.005 |
| | MaxAero01 | 0.004 | 0.003 | 0.001 | 0.018 | 0.012 | 0.004 |
| | MaxAero02 | 0.004 | 0.003 | 0.001 | 0.016 | 0.011 | 0.006 |
| | MaxAero03 | 0.004 | 0.003 | 0.001 | 0.017 | 0.012 | 0.006 |
| | MaxAero04 | 0.007 | 0.007 | 0.006 | 0.058 | 0.054 | 0.051 |
| | LeoOrbitL | 0.004 | 0.002 | 0.001 | 0.014 | 0.009 | 0.004 |
| | LeoOrbitH | 0.004 | 0.002 | 0.001 | 0.018 | 0.010 | 0.004 |
| Local Loop | CircAero01 | 0.008 | 0.005 | 0.002 | 0.037 | 0.022 | 0.006 |
| | CircAero02 | 0.008 | 0.005 | 0.002 | 0.028 | 0.018 | 0.005 |
| | CircAero03 | 0.008 | 0.005 | 0.002 | 0.029 | 0.020 | 0.006 |
| | CircAero04 | 0.008 | 0.005 | 0.002 | 0.029 | 0.020 | 0.006 |
| | MaxAero01 | 0.008 | 0.005 | 0.002 | 0.035 | 0.020 | 0.007 |
| | MaxAero02 | 0.008 | 0.005 | 0.002 | 0.033 | 0.018 | 0.006 |
| | MaxAero03 | 0.008 | 0.005 | 0.002 | 0.030 | 0.021 | 0.006 |
| | MaxAero04 | 0.008 | 0.005 | 0.002 | 0.031 | 0.021 | 0.007 |
| | LeoOrbitL | 0.003 | 0.002 | 0.001 | 0.014 | 0.007 | 0.003 |
| | LeoOrbitH | 0.003 | 0.002 | 0.001 | 0.013 | 0.008 | 0.002 |

Table 5 shows the RMS and peak errors for all the tested profiles for third order loops with selected optimal delay tracking loop parameters. For hub loop GEO profiles, the loop filter parameters are : Tc = 1 sec, $\zeta$ = 1.4 and k3factor=10. For hub loop LEO profiles, the same filter is used with Tc=0.2 sec and for the local loop, the same filter parameters are used with Tc-0.05 sec. In LEO conditions the performance is mostly limited by the error detector performance confirmed by the same RMS and peak errors for most mobility profiles in the table. While for GEO, the performance is mostly limited by the loop speed confirmed by the similar performance for all SNR levels. One can see that the 0.15 $\mu$s peak error target is achieved for all profiles except the CircAero4 and the MaxAero4 with Geo delay loop. But even here a 1.2 $\mu$s peak error could be acceptable for numerology 0 (i.e., 15 kHz SCS) if the peak errors only occur in rare events. Alternatively, those fast variations can be tracked successfully with the local loop as shown in Table 5.

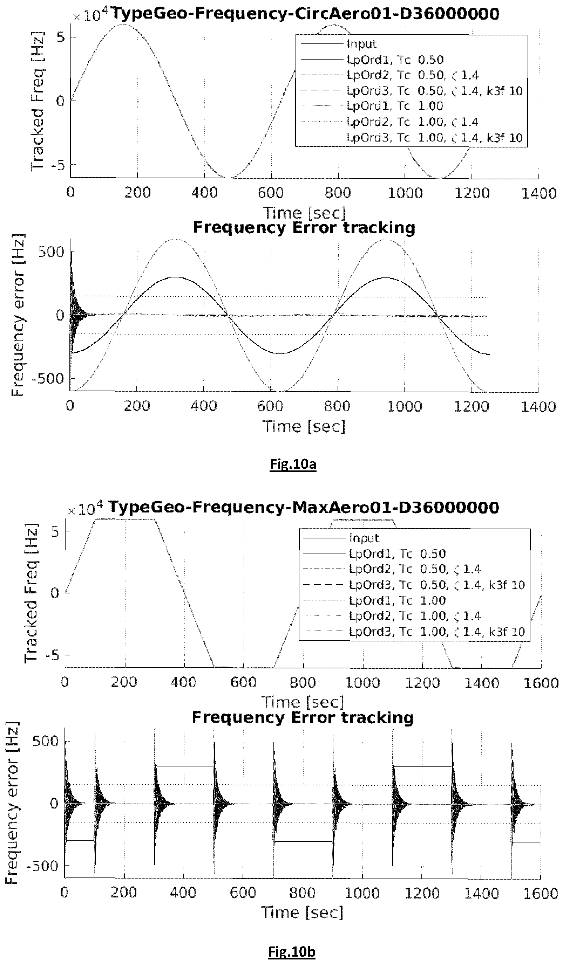

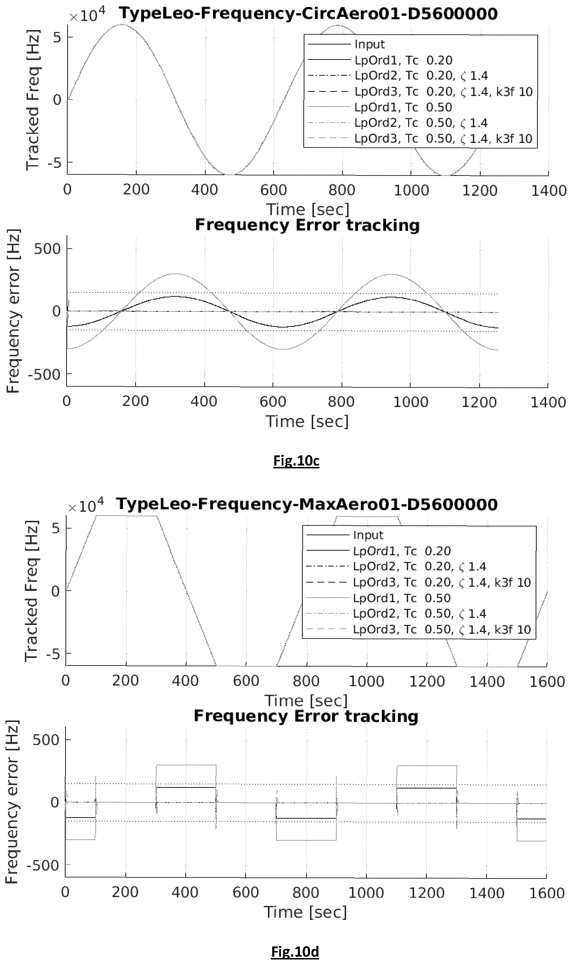

Similarly, to the time tracking results, Figs.10a-b-c-d show frequency tracking results. In this case the black dotted lines show the frequency tracking success criteria of 150 Hz (valid for numerology 0 or 15 kHz SCS). Again, tracking terminal movement in the presence of LEO link delays (Fig.10c and Fig.10d) is less critical than in the presence of GEO delays (Fig.10a and Fig.10b) because faster loops are allowed. Similarly, a first order loop will not meet the requirement and the lower time constants give the best results. The frequency transients for the abrupt changes in acceleration create high error peaks.

The delay is proportional to the distance while the frequency is proportional to the speed. The constant acceleration thus is equivalent to a ramp profile for the frequency offset that can be zeroed with second order loop. For the delay (Fig.8b) on the contrary a third order loop was required to zero the constant acceleration step.

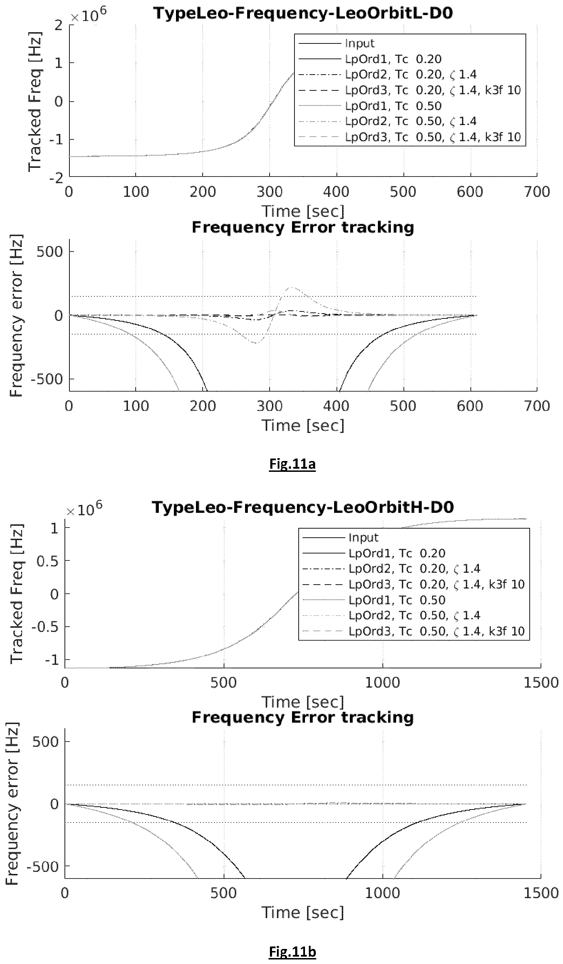

LEO satellite movements tracking performance is shown in Fig.11 for low (Fig.11a) and high (Fig.11b) pass profiles. A second order loop with Tc=0.2 or a third order loop with Tc=0.5 do comply with the required 150 Hz accuracy.

Table 6 shows all frequency tracking results for several Doppler profiles with Geo delay, Leo delay and local loop tracking. In local loop tracking no clock drift error is assumed as it cannot be tracked. (In local loop config, the clock drift must be corrected by another slower hub loop.) All tests are configured with the optimal third order loop with $\zeta$ =1.4 and k3factor=10. For the GEO delay profiles the optimal Tc is 1 sec, for the LEO delay profiles the loop Tc is set to 0.2 sec and for the local tracking there is no delay in the loop and the loop time constant is put to 0.05 sec. The optimal values were derived by means of simulations but can also be easily explained. The faster the loop the better the tracking. However, the Tc cannot be shorter than the loop delay as this would result in an unstable oscillating loop.

Table 6: Frequency tracking performance for GEO and LEO delay in all tested mobility profiles. Showing RMS and peak errors for several SNR levels

| Profile | | RMS error [Hz] | | | Peak Error [Hz] | | |
|---|---|---|---|---|---|---|---|
| | | -10dB | 0dB | 10dB | -10dB | 0dB | 10dB |
| GEO delay Loop | CircAero01 | 0.528 | 0.464 | 0.427 | 1.458 | 1.124 | 0.792 |
| | CircAero02 | 137.340 | 137.350 | 137.360 | 194.700 | 194.510 | 194.250 |
| | CircAero03 | 15.701 | 15.676 | 15.677 | 22.707 | 22.611 | 22.261 |
| | CircAero04 | 244.420 | 244.410 | 244.400 | 345.980 | 345.840 | 345.680 |
| | MaxAero01 | 59.037 | 59.033 | 59.024 | 562.580 | 562.870 | 562.540 |
| | MaxAero02 | 622.120 | 622.120 | 622.130 | 1875.600 | 1875.900 | 1875.700 |
| | MaxAero03 | 359.220 | 359.200 | 359.200 | 1875,400 | 1875.100 | 1874.900 |
| | MaxAero04 | 4016.000 | 4015.900 | 4015.900 | 18750.000 | 18749.000 | 18749.000 |
| | ClkDrift01 | 166.790 | 166.830 | 166.810 | 1124.400 | 1124.600 | 1124.200 |
| | ClkDrift02 | 16.640 | 16.713 | 16.688 | 112.130 | 112.760 | 112.460 |
| | ClkDrift03 | 69.853 | 71.446 | 71.436 | 312.850 | 252.250 | 251.920 |
| | ClkDrift04 | 7.227 | 7.042 | 7.052 | 26.510 | 28.495 | 28.362 |
| | Stable | 0.294 | 0.193 | 0.062 | 1.046 | 0.720 | 0.236 |
| LEO delay Loop | CircAero01 | 0.620 | 0.395 | 0.124 | 2.450 | 1.581 | 0.516 |
| | CircAero02 | 1.346 | 1.200 | 1.141 | 3.215 | 2.473 | 1.937 |
| | CircAero03 | 0.622 | 0.426 | 0.175 | 2.453 | 1.534 | 0.563 |
| | CircAero04 | 2.070 | 1.998 | 1.967 | 5.050 | 3.928 | 3.083 |
| | MaxAero01 | 5.015 | 4.989 | 4.982 | 104.600 | 104.710 | 104.580 |
| | MaxAero02 | 52.466 | 52.543 | 52.495 | 348.850 | 348.850 | 348.340 |
| | MaxAero03 | 30.307 | 30.314 | 30.303 | 348.880 | 348.930 | 348.390 |
| | MaxAero04 | 338.820 | 338.810 | 338.810 | 3483.500 | 3483.400 | 3482.700 |
| | LeoOrbitL | 0.745 | 0.617 | 0.522 | 4.221 | 3.109 | 2.501 |
| | LeoOrbitH | 0.601 | 0.380 | 0.121 | 2.326 | 1.520 | 0.445 |
| | ClkDrift01 | 14.085 | 14.078 | 14.077 | 208.390 | 208.870 | 208.960 |
| | ClkDrift02 | 1.541 | 1.456 | 1.416 | 21.106 | 21.367 | 20.947 |
| | ClkDrift03 | 30.075 | 29.321 | 29.323 | 130.500 | 125.790 | 125.740 |
| | ClkDrift04 | 3.079 | 2.968 | 2.929 | 11.134 | 12.128 | 12.452 |
| | Stable | 0.634 | 0.389 | 0.128 | 2.743 | 1.912 | 0.540 |
| Local Loop | CircAero01 | 1.163 | 0.723 | 0.229 | 4.949 | 3.170 | 0.926 |
| | CircAero02 | 1.145 | 0.714 | 0.231 | 4.678 | 3.007 | 0.885 |
| | CircAero03 | 1.149 | 0.732 | 0.229 | 5.345 | 2.757 | 0.873 |
| | CircAero04 | 1.133 | 0.704 | 0.228 | 4.516 | 2.873 | 0.892 |
| | MaxAero01 | 1.284 | 0.920 | 0.600 | 22.768 | 23.517 | 22.827 |
| | MaxAero02 | 5.962 | 5.937 | 5.880 | 76.782 | 76.843 | 75.710 |
| | MaxAero03 | 3.584 | 3.455 | 3.395 | 75.702 | 76.097 | 75.432 |
| | MaxAero04 | 37.957 | 37.930 | 37.913 | 755.760 | 755.720 | 754.380 |
| | LeoOrbitL | 0.670 | 0.601 | 0.521 | 3.360 | 2.915 | 2.475 |
| | LeoOrbitH | 0.474 | 0.301 | 0.096 | 1.861 | 1.206 | 0.346 |
| | Stable | 0.993 | 0.634 | 0.199 | 4.280 | 2.865 | 0.849 |

One can observe that the performance is mostly independent of the SNR for both the GEO and LEO loop delay cases. This is an indication that the performance is mostly limited by the loop delay and not by the estimator quality (as the latter does degrade for lower SNRs as shown in Fig.7). Only for the local loop the estimator accuracy can be limiting.

Assuming a maximum peak error of 150 Hz one can see that in GEO loop delay cases only the CircAero1 and 3 profiles comply and that only the more stringent clock drift profile comply. For LEO profiles, the situation is better where most tested profiles comply. Clearly the local loop gives best results for Doppler offsets tracking. No local reference clock offset was assumed in the local loop case and an extra hub loop is required for tracking of the local reference clock offsets.

The better performance of the local loop for Doppler offset tracking motivates the use of a combination of the hub loop and the local loop. The local loop best track Doppler effects caused by terminal or satellite movement (but misses the required reference clock offset corrections) while the hub loop can be slower and only track the clock offsets. Terminal mobility with abrupt acceleration changes combined with GEO delay is more challenging than the LEO satellite movements tracking, despite the higher speeds and accelerations of the satellite.

In the embodiments above, a transparent or bent pipe satellite is assumed. The solution applies equally well for regenerative satellites where the hub is in the satellite. The only difference is that the loop delay is halved, and the hub loops can be made a bit faster. The presented results are thus the worst case as the bent pipe satellite loop delay was accounted for.

In the described embodiments, a satellite link was assumed. The solution also applies to other channel with high mobility or high link delay condition where the first order loops cannot track the time or frequency error changes fast enough. These could be other NTN channels or even TN channel with larger cells or fast moving UEs.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Terminal (100) for communication with a hub over a non-terrestrial network communication channel and arranged to perform time and/or frequency corrections in return link communication towards said hub, said terminal comprising

   - a modulator (101) arranged to generate a return link signal to be transmitted,
   - one or more filters (102,114) arranged to receive an error signal indicative of a timing and/or frequency error in said return link communication and to output one or more filtered signals,
   - compensation means (103) to receive said one or more filtered signals, to compensate for said timing and/or frequency error and to output an indication of a timing and/or frequency correction to said modulator to be applied when generating said return link signal to be transmitted to said hub,

   whereby at least one of said one or more filters has a filter order higher than 1.

2. Terminal (100) as in claim 1, arranged to receive timing and/or frequency alignment information from a forward link connection from said hub towards said terminal and comprising an error determination block (113) arranged to derive said error signal indicative of timing and/or frequency alignment error for said return link from said information of said forward link connection and to apply said error signal to a first filter (114) of said one or more filters, said first filter having a filter order higher than 1, and wherein said indication of timing and/or frequency alignment error for said return link is fed in a local loop to said error determination block to derive said error signal.

3. Terminal as in claim 2, wherein said local loop is arranged to compensate for a timing and/or frequency error originating from link delay changes.

4. Terminal as in claim 2 or 3, wherein said local loop has a time constant smaller than a total round trip time of said return link and said forward link delay.

5. System comprising one or more terminals (100) as in any of the previous claims and a hub arranged to demodulate said return link signal.

6. System as in claim 5, wherein said hub is arranged to estimate a return link timing and/or frequency error and wherein said estimated return link timing and/or frequency error is fed back in a hub loop to a second filter (102) of said one or more filters.

7. System as in claim 6, when dependent on claim 2 or 3, wherein said local loop is arranged to compensate for a timing and/or frequency error originating from link delay changes and wherein said hub loop is arranged to compensate for a timing and/or frequency error originating from clock reference offsets between said hub and said one or more terminals.

8. System as in claim 6 or 7, when dependent on claim 2, wherein said second filter is a first order filter.

9. System as in any of claims 6 to 8, wherein said hub is arranged to transmit a SGNR Physical Broadcast Channel Synchronisation Signal block for estimating said timing and/or frequency alignment information of said forward link.

10. System as in any of claims 6 to 9, wherein said second filter is comprised in said hub.

11. System as in any of claims 6 to 10, wherein said hub loop has a time constant larger than said local loop time constant.

12. System as in in any of claims 6 to 11, comprising a regenerative satellite.

13. System as in any of the previous claims, wherein said modulator is an OFDM modulator.

14. Method for performing time and/or frequency correction in return link communication from a terminal (100) as in any of claims 1 to 4 to a hub (200) over a non-terrestrial network channel, the method comprising :

   - receiving in one or more filters of said terminal an error signal indicative of a timing and/or frequency error in said return link communication,
   - applying a filtered signal output by said one or more filters to a compensation means (103) to compensate for said timing and/or frequency error and to output an indication of timing and/or frequency correction,
   - generating in a modulator of said terminal a return link signal to be transmitted to a hub using said indication of timing and/or frequency correction,

   whereby at least one of said one or more filters has a filter order higher than 1.

15. Method for performing time and/or frequency correction as in claim 14, wherein said timing and/or frequency error is at least partially due to link delay changes between said terminal and said hub.

**Fig.1a**

**Fig.1b**

**Fig.1c**

**Fig.1d**

**Fig.2**

**Fig.3**

Fig.4

**Fig.5**

**Hub (200)**

Payload bits Return link

Hub Demod (201)

Hub Time or Frequency offset estimation (202)

Error (203)

Network Time and frequency reference

Forward link modulator (210)

Payload bits Forward link

Satellite Channel (300)

**UE (100)**

Return link Mod (101)

Payload bits Return link

Tracked Time/Freq Corrections (103)

Hub Loop filter (102)

Local Loop filter (114)

Hub Loop

Local Loop

Error (113)

Convert Forward link to Return link (112)

Forward link Time or Frequency offset estimations (111)

Forward link Demodulator (110)

Payload bits Forward link

**Fig.6**

**Fig.7**

**TypeGeo-Delay-CircAero01-D36000000**

**Delay Error tracking**

Fig.8a

**TypeGeo-Delay-MaxAero01-D36000000**

**Delay Error tracking**

Fig.8b

**Fig.8c**

**Fig.8d**

Fig.9a

Fig.9b

Fig.10a

Fig.10b

**Fig.10c**

**Fig.10d**

Fig.11a

Fig.11b

| | Europäisches Patentamt European Patent Office Office européen des brevets | **EUROPEAN SEARCH REPORT** | **Application Number** EP 23 20 4833 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/084736 A1 (REGUNATHAN MURALI [US] ET AL) 12 March 2020 (2020-03-12) | 1-5, 13-15 | INV. H04B7/185 |
| A | * abstract * * paragraphs [0028] - [0243] * * figures 1-12 * | 6-12 | H04B7/212 |
| A | FRANCESCO ROSSETTO ET AL: "On synchronisation for SC-FDMA waveform over GEO satellite networks", ADVANCED SATELLITE MULTIMEDIA SYSTEMS CONFERENCE (ASMS) AND 12TH SIGNAL PROCESSING FOR SPACE COMMUNICATIONS WORKSHOP (SPSC), 2012 6TH, IEEE, 5 September 2012 (2012-09-05), pages 233-237, XP032253945, DOI: 10.1109/ASMS-SPSC.2012.6333082 ISBN: 978-1-4673-2676-6 * the whole document * | 1-15 | |
| A | US 2022/149930 A1 (ROLLE ALAIN [BE] ET AL) 12 May 2022 (2022-05-12) * abstract * * paragraphs [0083] - [0157] * * figures 1-16 * | 1-15 | TECHNICAL FIELDS SEARCHED (IPC) H04B |

The present search report has been drawn up for all claims

| Place of search | Date of completion of the search | Examiner |
|---|---|---|
| Munich | 4 April 2024 | Aquilani, Dario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 4833**

This annex lists the patent family members relating to the patent documents cited in the above-mentioned European search report.
The members are as contained in the European Patent Office EDP file on
The European Patent Office is in no way liable for these particulars which are merely given for the purpose of information.

**04-04-2024**

| Patent document cited in search report | Publication date | Patent family member(s) | | Publication date |
|---|---|---|---|---|
| US 2020084736 A1 | 12-03-2020 | DE | 112018006020 T5 | 17-09-2020 |
| | | GB | 2583280 A | 21-10-2020 |
| | | US | 2020084736 A1 | 12-03-2020 |
| | | WO | 2019133176 A1 | 04-07-2019 |
| US 2022149930 A1 | 12-05-2022 | CA | 3147856 A1 | 04-02-2021 |
| | | CN | 114026798 A | 08-02-2022 |
| | | EP | 3772187 A1 | 03-02-2021 |
| | | EP | 3879722 A1 | 15-09-2021 |
| | | IL | 290203 A | 01-03-2022 |
| | | US | 2022149930 A1 | 12-05-2022 |
| | | WO | 2021018613 A1 | 04-02-2021 |
| | | ZA | 202110424 B | 28-09-2022 |

EPO FORM P0459

For more details about this annex : see Official Journal of the European Patent Office, No. 12/82

**EP 4 542 877 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6675013 B1

- US 1145680 B1

### Non-patent literature cited in the description

- **P. DELBEKE et al.** Multi Resolution Coding (MRC) Satellite Waveform. *Ka Conference*, 2021
- 3rd Generation Partnership Project; Technical Specification Group Radio Access Network; Solutions for NR to Support Non-Terrestrial Networks (NTN). *3GPP NTN report*

- **X.LIN et al.** Doppler Shift Estimation in 5G New Radio Non-Terrestrial Networks. *IEEE Global Communications Conference*, 2021
- **D. DELARUELLE**. Robust Logon Waveform Deployed in Large Mobile Satellite Access Networks. *Ka Conference*, 2019